# EUROPÄISCHE PATENTSCHRIFT

(11) **EP 1 541 007 B1**
(45) Veröffentlichungstag und Bekanntmachung des Hinweises auf die Patenterteilung: **13.12.2006**
(21) Anmeldenummer: 04027612.3
(22) Anmeldetag: 20.11.2004
(51) Int. Cl.: A01D 34/81

(54) **Verfahren und Vorrichtung zum Abschneiden und Zerschneiden von insbesondere hoch wachsendem Schnittgut**
Method and apparatus for cutting and mulching of in particular high grown grass cuttings
Méthode et appareil pour couper et broyer en particulier des matières coupées hautes

(30) Priorität: 09.12.2003 DE 10357465
(43) Veröffentlichungstag der Anmeldung: 15.06.2005
(73) Patentinhaber: ESM ENNEPETALER SCHNEID- UND MÄHTECHNIK GMBH & CO. KG, D-58256 Ennepetal (DE)
(72) Erfinder: Schlasse, Manfred, 58089 Hagen (DE)
(74) Vertreter: Rehberg Hüppe + Partner

(56) Entgegenhaltungen:
- EP-A- 0 756 814
- DE-A1- 10 039 834

## Beschreibung

Die Erfindung betrifft ein Verfahren zum Abschneiden und Zerschneiden von insbesondere hoch wachsendem Schnittgut gemäß dem Oberbegriff des Anspruchs 1 sowie eine Vorrichtung zum Abschneiden und Zerschneiden von insbesondere hoch wachsendem Schnittgut gemäß dem Oberbegriff des Anspruchs 5.

Unter Schnittgut wird Gras, Halmgut und sonstige Pflanzen verstanden, die einen im Wesentlichen aufrechten Wuchs aufweisen und bei denen es darauf ankommt, das betreffende Schnittgut nicht nur einmal relativ dicht über dem Boden abzuschneiden, sondern das abgeschnittene Schnittgut auch noch weiter zu zerschneiden. Das Verfahren lässt sich damit auch beim Mulchen einsetzen, insbesondere dann, wenn längere Zeit nicht geschnitten wurde. Es ist besonders geeignet für hoch gewachsenes Gras, wie es beispielsweise an den Randstreifen von Fahrbahnen und sonstigen Straßen vorkommt.

### STAND DER TECHNIK

Ein Verfahren und eine Vorrichtung der eingangs beschriebenen Art sind aus der DE 100 39 834 C2 bekannt. Die Vorrichtung besitzt mindestens zwei in einem Gehäuse in Arbeitsrichtung parallel zum Boden bewegte Messer, die in einer etwa horizontal zum Boden ausgerichteten Schnittebene um eine etwa vertikal ausgerichtete Welle in Drehrichtung umlaufend angetrieben werden. Das Schnittgut wird durch ein flächig ausgebildetes Leitelement des Gehäuses in eine in Arbeitsrichtung vorwärts geneigte Stellung überführt und mit einem ersten Messerbereich am Boden abgeschnitten. Der erste Messerbereich befindet sich radial außen am Messer und ist im Wesentlichen horizontal ausgerichtet angeordnet. Der zweite Messerbereich schließt radial nach innen an. Durch eine tangential aufwärts geneigte Anstellung des zweiten Messerbereichs der Messer zur Schnittebene wird auf das Schnittgut eine Förderwirkung in einer auf den Boden gerichteten Förderrichtung ausgeübt. Der erste Messerbereich dient zum Abschneiden des Schnittguts. Der zweite Messerbereich dient zum Zerschneiden des abgeschnittenen Schnittguts. Der zweite Messerbereich ist mit radial abwärts und tangential aufwärts geneigten Anstellwinkeln schräg zur Schnittebene angeordnet, so dass damit auf das Schnittgut eine Förderwirkung in einer auf den Boden gerichteten, durch den tangentialen Anstellwinkel festgelegten Förderrichtung ausgeübt wird. Das bekannte Verfahren sieht zunächst vor, das mehr oder weniger aufrecht wachsende Halmgut in eine in Arbeitsrichtung vorwärts geneigte Stellung zu überführen und dabei vom Boden abzuschneiden. Das Überführen in die vorwärts geneigte Stellung und das Abschneiden können mehr oder weniger gleichzeitig oder kurz nacheinander erfolgen. Mit der Arbeitsrichtung ist die Richtung beschrieben, in der beispielsweise der Mäher auf dem Boden bewegt wird, um eine bestimmte Fläche zu mähen. Das Schnittgut wird in einem ersten Schritt über dem Boden abgeschnitten, so dass in der Regel ein relativ langgestreckter Halm entsteht, der von seinem Stoppelteil mit der Wurzel getrennt ist. Die aus einer Vielzahl von solchen Halmen bestehende Halmwand ist also in Arbeitsrichtung vorwärts geneigt und wird so abgeschnitten. Dabei legen sich die abgeschnittenen Halme der Halmwand nach vorn in die geneigte Stellung und belasten in Arbeitsrichtung gesehen das sich nach vorn anschließende, noch nicht geschnittene Schnittgut. In einem zweiten Schnitt wird das sich in der nach vorwärts geneigten Stellung befindliche Schnittgut nun angenähert senkrecht zu der geneigten Stellung zerschnitten. Die Schnittrichtung dieses Zerschneid- oder besser Häckselvorgangs erstreckt sich damit senkrecht zur Richtung der Halme, so dass das Schnittgut auf optimal kleiner Fläche durchtrennt wird, was einen vorteilhaft geringen Kraftbedarf nach sich zieht. Der oberhalb der Schnittebene befindliche Teil bzw. Raum bleibt weitgehend frei von Schnittgut. Eine Verstopfungsgefahr tritt nicht auf. Das abgeschnittene und zerschnittene Schnittgut wird vielmehr nach unten gefördert und gelangt damit auf kürzestem Wege in eine verdichtete Schwadablage, die leicht verrottet. Das bekannte Verfahren könnte man auch als Vertikalhäckselung und die entsprechende Vorrichtung als Vertikalhäcksler bezeichnen, etwa im Gegensatz zu den ebenfalls bekannten mit horizontal ausgerichteter Welle versehenen Häckslem. Dennoch besitzen das Verfahren und die Vorrichtung wesentlich mehr übereinstimmende Gemeinsamkeiten mit den eingangs beschriebenen Sichelmähern. Dies gilt insbesondere für die Anzahl der Messer.

Das flächig ausgebildete Leitelement am Gehäuse erstreckt sich senkrecht zur Arbeitsrichtung und tangential mit Abstand zum Schneidkreis der Messer. Die durch das Leitelement festgelegte Winkelposition des umgebogenen Schnittgutes beim Abschneiden variiert über die Arbeitsbreite. Damit ergeben sich über die Arbeitsbreite unterschiedliche Verhältnisse beim Abschneiden und auch beim Zerschneiden des Schnittguts. Obwohl der das Abschneiden bewirkende Messerbereich horizontal ausgerichtet ist, ergibt sich quer zur Arbeitsrichtung ein muldenförmiges Schnittbild. Die örtlich gemeinsamen übereinstimmenden Winkelpositionen sind weder für das Abschneiden, noch für das Zerschneiden optimal.

Abhängig von der Drehrichtung der Messer wird das Schnittgut auf einer Seite des Gehäuses der Vorrichtung zusammengedrängt. Diese Verdichtungswirkung erfolgt damit in einem Bereich, in dem die Zerschneidewirkung abnimmt. Es besteht daher die Gefahr, dass das abgeschnittene, nicht genügend zerschnittene Schnittgut oberhalb der Messer und unterhalb des Gehäuses nach hinten durchtritt oder dort gar zu Verstopfungen führt.

Eine weitere Vorrichtung ist aus der DE 42 02 865 C2 bekannt. Es wird dort ein Rasenmäher mit einem verfahrbaren Gehäuse beschrieben. Solche Mäher werden auch als Sichelmäher bezeichnet. Der Mäher weist mehrere Messer auf, die an einem Messerträger vorgesehen sind. Die Messer laufen in einer etwa horizontal zum Boden ausgerichteten Schnittebene um. Sie werden über eine etwa vertikal ausgerichtete Welle in Drehrichtung umlaufend angetrieben. Ein Teil des Messers ist in Drehrichtung gesehen zur Schnittebene geneigt angestellt, um eine Luftströmung zu erzeugen, die nach oben in einen von dem Gehäuse umgebenen Raum gerichtet ist. Diese Luftströmung dient dazu, das abgeschnittene Schnittgut in den Raum zwischen Schnittebene und Gehäuse, also oberhalb der Schnittebene, zu fördern und aufgewirbelt zu halten. Durch Einwirkung der Schwerkraft fällt das Schnittgut in Richtung auf die Schnittebene herab und wird teilweise von gesonderten Mulchmessern, teilweise aber auch von den Messern auf dem Messerträger erfasst und zerschnitten. Es tritt hier ein gewisser Häckseleffekt ein. Die Wirkung ist jedoch nur begrenzt. Solche Mäher ergeben insbesondere bei kurz gewachsenem Gras einen guten Bodenschnitt, ein sauberes Schnittbild und erfüllen bei günstigen Herstellkosten ihre Funktion zufriedenstellend. Solche Mäher besitzen einen vergleichsweise geringen Schnittkraftbedarf. Die Anzahl der Messer ist beschränkt und damit vorteilhaft klein. Die Zerkleinerungswirkung ist jedoch nur bedingt zu erreichen, so dass von einer Häckselwirkung an sich nicht mehr gesprochen werden kann. Beim Arbeiten mit solchen Mähern besteht immer wieder eine nicht unerhebliche Verstopfungsgefahr, die eine Unterbrechung des Mähvorgangs nach sich zieht und das Schnittbild beeinträchtigt. Ein weiterer Nachteil besteht darin, dass das Schnittgut in einem relativ lockeren und voluminösen Teppich abgelegt wird. Dies ist schlecht für eine schnelle Verrottung des Schnittguts.

Ein ähnliches Verfahren und eine entsprechende Vorrichtung sind aus der US 5,711,141 bekannt. Es wird ein Messerarm gezeigt und beschrieben, der um eine etwa vertikal ausgerichtete Welle in Drehrichtung umlaufend angetrieben wird. Die beiden sich radial von der Welle nach außen erstreckenden Bereiche des Messerarms sind von innen nach außen übereinstimmend ausgebildet. Die radial äußeren Bereiche sind auf der der Schneidkante abgekehrten Seite nach oben geneigt angestellt, so dass durch diese Bereiche eine aufwärts gerichtete Luftströmung erzeugt wird, die eine Liftwirkung auf das ebenfalls mit diesen äußeren Bereichen abgeschnittene Schnittgut ausgeübt wird. Etwa auf zwei Dritteln der radialen Erstreckung der beiden Bereiche des Messerarms sind weitere Bereiche angeordnet und ausgebildet, bei denen der in Drehrichtung jeweils hintere Bereich tiefer liegt als der vordere Bereich. Damit wird eine nach unten gerichtete Luftströmung erzeugt, die auf das abgeschnittene Schnittgut eine nach unten gerichtete Kraft ausüben soll, wobei das Schnittgut in diesem Bereich dann zerschnitten werden soll. Die beabsichtigte Zerschneidwirkung setzt eine Umkehr der Bewegungsrichtung des geschnittenen Schnittgutes voraus. Ob das Schnittgut überhaupt seine Bewegungsrichtung umkehrt, wird maßgeblich von einer gehäuseartigen Umgebung des Messerarms mitbestimmt, über dessen Gestaltung nichts ausgesagt wird. Auf jeden Fall liegen in den radial äußeren Bereichen aufgrund des Durchmesserzuwachses erheblich höhere örtliche Geschwindigkeiten vor als radial weiter innen. Dies bedeutet, dass die Anhebewirkung auf das abgeschnittene Schnittgut wesentlich größer ist als die Niederdrückwirkung. Damit besteht nach wie vor eine Verstopfungsgefahr. Weiterhin ist nicht sichergestellt, dass das gesamte abgeschnittene Schnittgut oder zumindest große Teile davon überhaupt radial nach innen in einen Bereich gelangen, in dem das abgeschnittene Schnittgut zerschnitten werden kann.

Die DE 44 34 272 C1 zeigt ein Sichelmähwerk mit einem rotierend angetriebenen Messer, dessen Schnittkanten gerade durchgehend in der Schneidebene angeordnet sind. Im Bereich des einen Armes ist der der Schnittkante gegenüberliegende Bereich nach oben abgewinkelt und bildet so eine Leitschaufel. Der andere Arm des Messers ist dagegen nach unten abgewinkelt und bildet so eine weitere Leitschaufel. Der eine Arm des Messers erbringt damit eine nach oben gerichtete Luftströmung, während der andere Arm eine nach unten gerichtete Luftströmung verursacht. Durch den vergleichsweise schnellen Antrieb des Messers werden sich diese beiden Wirkungen weitgehend aufheben, so dass eine ausgeprägte stabilisierte Luftströmung nicht erzielbar ist. Auf diese Weise soll es möglich sein, das Schnittgut mehrfach zu zerschneiden. Es ist auch eine abgewinkelte Messerform bekannt, so dass sich die Schnittkanten in mehreren Ebenen erstrecken. Die radial äußeren Enden des Messers sind mit Leiteinrichtungen versehen, um ein Aufwirbeln und Herabdrücken des abgeschnittenen Schnittgutes zu bewirken. Dies geschieht im Zusammenwirken mit einem topfartig ausgebildeten Gehäuse.

Darüber hinaus gibt es so genannte Schlegelmäher, die jedoch einen grundsätzlich anderen Aufbau mit einer anderen Anordnung ihrer Elemente aufweisen. Schlegelmäher besitzen eine horizontale Welle, an der eine Vielzahl von pendelnd aufgehängten Schlegelmessern vorgesehen sind, die beim Antrieb der horizontalen Welle sich in vertikal ausgerichteten Kreisbahnen bewegen. Solche Schlegelmäher fräsen gleichsam das Schnittgut ab. Die Schlegelmesser werden durch Fliehkraftwirkung ausgerichtet und können beim Auftreffen auf Hindernisse ausweichen. Solche Schlegelmäher erbringen eine ausgezeichnete Häckselwirkung. Das Schnittgut wird mit hoher Gleichmäßigkeit fein zerschnitten. Das zerschnittene Schnittgut wird meist verdichtet in einem dünnen Schwad abgelegt, was der Verrottung förderlich ist. Schlegelmäher sind jedoch aufgrund ihrer besonderen Bauart aufwendiger als Sichelmäher. Die Anzahl der Schlegelmesser ist wesentlich größer als bei Sichelmähern. Das die Schlegelmesser tragende Mähaggregat muss in der Regel ausgewuchtet werden und erfordert einen vergleichsweise höheren Schnittkraftbedarf. Da die Antriebswelle horizontal ausgerichtet ist, ist in der Regel die Verwendung eines Winkelgetriebes erforderlich, um das Drehmoment von einem Motor mit vertikal ausgerichteter Achse auf die horizontal ausgerichtete Antriebsachse zu übertragen.

Aus der DE 199 47 416 A1 ist ein Rasenmäher bekannt, der zwei Leitelemente in Form zweier Zinkenreihen vor dem rotierenden Messer aufweist. Die Zinken der zweiten Zinkenreihe greifen in Lücken der Zinken der ersten Zinkenreihe und sind höhenverstellbar, so dass die Lücken der Zinken der ersten Zinkenreihe mehr oder weniger geschlossen werden können. Durch die beiden zusammenwirkenden Zinkenreihen wird das Schnittgut ausgerichtet, so dass unter Beibehaltung eines sauberen Rasenschnittes auch bei hoch wachsendem Schnittgut die Schnittqualität verbessert wird.

Aus der EP 04 98 294 B1 ist ein Mäher mit einer im Wesentlichen vertikal verlaufenden Gehäusewand und mindestens einem angetriebenen Mähmesser bekannt, dem ein innerhalb des Gehäuses angeordnetes Mulchblech zugeordnet ist. Das Mulchblech dient dem Zurückführen des abgeschnittenen Schnittguts relativ zu dem Mähmesser, so dass das Schnittgut einem Zerkleinerungsvorgang unterworfen wird.

### AUFGABE DER ERFINDUNG

Der Erfindung liegt die Problematik zugrunde, aufbauend auf einem Verfahren und einer Vorrichtung, wie sie für Sichelmäher typisch ist, ein über die Arbeitsbreite gleichmäßigeres Arbeitsergebnis bei niedrigem Leistungsbedarf zu erzielen. Dies gilt für das Abschneiden, das Zerschneiden, das entstehende Schnittbild und eine gute Zerkleinerungswirkung auch bei hoch gewachsenem Schnittgut.

### LÖSUNG

Zur Lösung dieser Aufgabe sind die Merkmale des Anspruchs 1 sowie des Anspruchs 5 vorgesehen. Vorteilhafte Ausgestaltungen sind in den Unteransprüchen beschrieben.

Erfindungsgemäß wird bei einem Verfahren der eingangs beschriebenen Art das Schnittgut mit einem ersten Leitelement in eine in Arbeitsrichtung vorwärts geneigte Stellung in eine erste Winkelposition überführt und am Boden mit ersten Messerbereichen in dieser ersten Winkelposition abgeschnitten, und das abgeschnittene Schnittgut dann mit einem zweiten Leitelement in eine zweite Winkelposition überführt und mit anderen Messerbereichen in dieser zweiten Winkelposition zerschnitten.

### BESCHREIBUNG DER ERFINDUNG

Die eine über die Arbeitsbreite variierende Winkelposition des Schnittgutes wird in zwei Winkelpositionen aufgeteilt. Die erste Winkelposition dient dem Abschneiden. Die zweite Winkelposition dient dem Zerschneiden. Die beiden Winkelpositionen sind unterschiedlich festgelegt. Unter dem Begriff "Abschneiden" wird der erste bodennahe Schnitt verstanden, mit der das Schnittgut bzw. der Halm über dem Boden abgeschnitten wird. Mit dem Begriff "Zerschneiden" werden die nachfolgenden Schnitte an dem Schnittgut verstanden, mit denen das langgestreckte Schnittgut in einzelne Abschnitte unterteilt und damit gehäckselt wird. Das Abschneiden wird von dem Zerschneiden funktionsmäßig getrennt. Jede der beiden Winkelpositionen kann auf ihre Funktion unterschiedlich und optimal abgestimmt werden. Die Abstimmung erfolgt relativ zu unterschiedlichen Messerbereichen der Messer. Damit wird es möglich, sowohl beim Abschneiden als auch beim Zerschneiden die Schnitte überwiegend senkrecht zum Halm durchzuführen. Hieraus resultiert vorteilhaft ein noch niedrigerer Schnittkraftbedarf, verbunden mit einer ausgezeichneten Häckselwirkung. Dies wiederum wirkt einer Verstopfungsgefahr entgegen. Das Abschneiden kann mehr oder weniger gleichzeitig mit dem Umbiegen der Halmwand in die in Arbeitsrichtung nach vorn geneigte Stellung der ersten Winkelposition erfolgen, zumindest im Mittelbereich der Arbeitsbreite. Die zweite Winkelposition zum Zerschneiden kann unabhängig von der ersten Winkelposition zum Abschneiden festgelegt und positioniert werden.

Für den Abschneidvorgang ist es sinnvoll, wenn die Richtung der mit den betreffenden Messerbereichen erzeugten Luftströmung gleichsam umgekehrt gerichtet ist wie bei dem Zerschneiden. Ein guter und genauer Schnitt im bodennahen Bereich beim Abschneiden wird gleichsam dann erreicht, wenn das Halmgut durch die Luftströmung nach oben ausgerichtet, also gleichsam durch einen Ziehvorgang in der gestreckten Lage gehalten wird. In dieser Stellung erfolgt also eine Ausrichtung der Halme des Schnittguts unter einer Streckwirkung, so dass der Abschneidvorgang begünstigt ablaufen kann. Eine nennenswerte Förderwirkung tritt dabei jedoch auf das Schnittgut nicht ein, weil es durch die nach vorwärts umgebogene Stellung von benachbartem Schneidgut sicher gehalten wird. Durch die nachfolgende Umkehrung der Luftströmung nach unten wird dann das abgeschnittene Schnittgut den zerschneidenden Bereichen der Messer zugeführt.

Das Schnittgut wird während der Überführung in die in Arbeitsrichtung vorwärts geneigte Stellung der ersten Winkelposition an einem seitlichen Umbiegen quer zur Arbeitsrichtung gehindert und dabei abgeschnitten. Die erste Winkelposition zum Abschneiden kann somit durch ein oder mehrere Leitelemente erzielt werden, die ein seitliches Umbiegen der Halme des Schnittguts verhindern. Diese Leitelemente können sich durchaus senkrecht zu der Arbeitsrichtung erstrecken. Sie müssen soviel Reibung auf die einzelnen stehenden Halme während des Umbiegens aufbringen, dass diese sich nur in Arbeitsrichtung umbiegen. Das abgeschnittene Schnittgut wird in der zweiten Winkelposition, die unabhängig von der ersten Winkelposition bestimmt und eingenommen wird, unter im Wesentlichen gleichen Verhältnissen über die Arbeitsbreite entsprechend dem Schnittkreis während der Förderung in der auf den Boden gerichteten Förderrichtung mehrfach zerschnitten. Das oder die zweiten Leitelemente können unabhängig von der Formgebung und Anordnung des oder der ersten Leitelemente an den Schnittkreis angepasst werden, also beispielsweise bogenförmig oder polygonal gestaltet und angeordnet sein.

Das Schnittgut wird mit einem radial nach außen vorstehenden ersten Bereich der Messer abgeschnitten, wobei diese Messerbereiche in einem Winkel aus einem Winkelbereich zwischen 10° bis 25° gegenüber der Horizontalebene in radialer Richtung nach außen nach unten geneigt angeordnet sind. Dieser Winkelbereich ist auf den Verlauf des umgebogenen Schnittguts abgestimmt und stellt einen Kompromiss dar. Der Kompromiss zielt auf senkrechtes Abschneiden des Schnittguts und damit auf niedrigen Schnittkraftbedarf ab.

Entsprechendes gilt für das Zerschneiden. Das Schnittgut wird mit einem radial zurückliegenden zweiten Bereich der Messer zerschnitten, wobei diese Messerbereiche in einem Winkel aus einem Winkelbereich zwischen 50° bis 75° gegenüber der Horizontalebene in Richtung radial von innen nach außen nach unten geneigt angeordnet sind. Auch dieser Winkelbereich ist auf den Verlauf des Schnittguts in der zweiten Winkelposition abgestimmt und stellt einen Kompromiss dar. Der Kompromiss zielt auf senkrechtes Zerschneiden des Schnittguts und damit auf niedrigen Schnittkraftbedarf ab.

Die Vorrichtung der eingangs beschriebenen Art kennzeichnet sich erfindungsgemäß dadurch, dass sie mindestens ein zweites ortsfest angeordnetes Leitelement für die Überführung des abgeschnittenen Schnittguts in die zweite Winkelposition und zum Zerschneiden mit den zweiten Messerbereichen in dieser zweiten Winkelposition aufweist, wobei das zweite Leitelement oder die zweiten Leitelemente zwecks Schaffung im Wesentlichen gleicher Verhältnisse über die Arbeitsbreite entsprechend dem Schnittkreis ausgebildet und angeordnet sind.

Eine zur Durchführung des Verfahrens geeignete Vorrichtung sieht damit erste und zweite ortsfest angeordnete Leitelemente oder entsprechende Leiteinrichtungen vor, die ortsfest am Gehäuse der Vorrichtung angeordnet oder aus einem Teil des Gehäuses gebildet ist. Das erste Leitelement dient zur Herbeiführung der ersten Winkelposition des Schnittgutes zum Abschneiden. Das zweite Leitelement dient der Herbeiführung der zweiten Winkelposition des abgeschnittenen Schnittgutes zum Zerschneiden. Das erste Leitelement hat die Aufgabe, das Schnittgut zu erfassen und in die erste Winkelposition umzubiegen, damit der Abschneidevorgang optimal ablaufen kann. Dabei wird auf das abgeschnittene, jedoch noch nicht zerkleinerte Schnittgut so eingewirkt, dass die Halmwand in eine in Arbeitsrichtung vorwärts geneigte gebogene Stellung umgelegt wird und sich auf noch nicht geschnittenem Schnittgut abstützt. Diese nach vorwärts geneigte Zwischenstellung wird durch das zweite Leitelement verändert. Das abgeschnittene Schnittgut wird in die zweite Winkelstellung gebracht, die in einem Winkelbereich von etwa 40° bis 15° zur Vertikalebene festgelegt ist.

Korrespondierend zu dieser nach vorwärts geneigten Stellung besitzen die Messer zumindest Teile oder Bereiche, über die sich auch die Messerschneide erstreckt und die in radialer Richtung etwa senkrecht geneigt oder abgekröpft zu der Erstreckung des geneigten Schnittguts positioniert sind. Dadurch erfolgt ein Zerschneiden des abgeschnittenen Schnittguts senkrecht oder zumindest etwa senkrecht zu der Erstreckung der Halme des Schnittguts. Zum zweiten ist dieser Teil oder Bereich des Messers in Dreh- oder Umfangsrichtung schräg aufwärts gerichtet angeordnet, so dass beim rotierenden Antrieb der Messer eine nach unten, also in Richtung auf den Boden, gerichtete Luftströmung entsteht, von der die abgeschnittenen Halme des Schnittguts mitgenommen werden, so dass sie fortlaufend in den Bereich dieser Messer eintreten und die häckselnde Zerschneidwirkung Platz greift. Dabei werden relativ kurze Abschnitte des Schnittguts gebildet, die unter Fortsetzung ihrer Bewegungsrichtung im vorderen Bereich der Mähorgane, also noch vor der Antriebswelle, in einem verdichteten Schwad auf dem Boden abgelegt bzw. auf diese abgeschleudert werden. Das zerhäckselte Schnittgut gelangt damit auf kürzestem Wege in die Bodenablage, so dass eine Verstopfungsgefahr oberhalb der Messer weitgehend beseitigt ist. Damit wird vorteilhaft eine Häckselwirkung erzielt, obwohl die Anzahl der Messer relativ klein ist. Das Schnittgut wird gleichsam vertikal gehäckselt.

Die beiden durch die beiden Leitelemente festgelegten Winkelpositionen variieren über die Arbeitsbreite. Die Ausbildung der Leitelemente erfolgt jedoch so, dass die Variation möglichst gering bleibt und über die Arbeitsbreite möglichst konstante Bedingungen für das Abschneiden und für das Zerschneiden entstehen. Die beiden Winkelpositionen sind auf die beiden Messerbereiche abgestimmt. Der erste Messerbereich ist radial abwärts geneigt in einem Anstellwinkel aus einem Winkelbereich zwischen etwa 10° und 25° zur Horizontalebene angeordnet. Der zweite Messerbereich ist radial abwärts geneigt in einem Anstellwinkel aus einem Winkelbereich zwischen etwa 50° und 75° zur Horizontalebene angeordnet.

Das erste ortsfest angeordnete Leitelement weist eine sich senkrecht zur Arbeitsrichtung erstreckende Leitkante auf, die das Schnittgut an einem seitlichen Umbiegen quer zur Arbeitsrichtung hindert. Das zweite ortsfest angeordnete Leitelement weist eine sich entsprechend dem Schnittkreis etwa bogenförmig oder polygonal erstreckende Leitkante auf, die das abgeschnittene Schnittgut unter im Wesentlichen gleichen Verhältnissen über die Arbeitsbreite in die zweite Winkelposition bringt.

Das zweite Leitelement kann in einer besonders einfachen Ausführungsform in Form eines gebogenen Rohres vorgesehen sein, dessen Krümmung an den Verlauf des Schnittkreises im vorderen Bereich angepasst ist. Das zweite ortsfest angeordnete Leitelement ist nur geringfügig höher als die höchste Stelle der umlaufend angetriebenen Messer angeordnet. Das zweite ortsfest angeordnete Leitelement ist unterhalb bzw. tiefer als das den Schneidkreis überdeckende Gehäuse angeordnet. Der Durchtrittsspalt zwischen Messer und Gehäuse der Vorrichtung wird damit hinreichend klein oder versperrt, so dass das abgeschnittene und zerschnittene Schnittgut hier nicht nach hinten durchtreten kann. Damit ist zugleich verhindert, dass sich Schnittgut an der Antriebswelle für die Messer aufwickeln kann.

Die Vorrichtung kann auf der durch die Drehrichtung der Messer bestimmten Seite ein ortsfest angeordnetes Sperrelement zum Verhindern des Durchtritts von Schnittgut nach hinten aufweisen. Das Sperrelement ist ein gehäusefestes Einbauelement, dessen Formgebung auf die Formgebung der beiden Bereiche der Messer und die Gestaltung des Gehäuses so abgestimmt ist, dass der Durchtrittsquerschnitt zwischen der Bahn der Messer und dem Gehäuse möglichst weitgehend versperrt wird.

Der erste radial außen endende Messerbereich weist - wie an sich auch der zweite Messerbereich - eine Schneide auf, die radial außen als tiefster Punkt der Messer endet. Zu diesem Zweck kann jedes Messer im radial äußeren Endbereich auf der dem Boden zugekehrten Unterseite eine Abflachung aufweisen. Auch eine schräg endende Stirnkante am freien Ende des Messers kann zu diesem Zweck vorgesehen sein. Beide Möglichkeiten verhindern, dass die Halmwand aus dem noch nicht abgeschnittenen Schnittgut eingedrückt und damit der Abschneidevorgang negativ beeinflusst wird.

Die Messer können einen radial vorstehenden Bereich aufweisen, der während des Abschneidens auf das Schnittgut eine Kraftwirkung in einer vom Boden weg aufwärts gerichteten Richtung ausübt. Es handelt sich dabei um den freistehenden Teil der Messer, also einen Bereich, der den Schneidkreis außen begrenzt und der bei der Vorwärtsbewegung der Vorrichtung in Arbeitsrichtung als erster mit dem Schneidgut in Kontakt kommt. Dieser Teil oder Bereich erfüllt die Abschneidfunktion. Hierbei wird an dem noch im Boden verwurzelten und mit dem Boden verbundenen Schnittgut gleichsam gezogen und eine Aufrichtwirkung erbracht, die den Abschneidvorgang begünstigt. Allerdings ist die hierbei erbrachte Luftströmung gerade wieder anders gerichtet, als es für den nachfolgenden Zerkleinerungsvorgang erforderlich ist.

Die Messer können radial von innen nach außen zunächst einen aufwärts gekröpften Teil, an diesen anschließend den das Zerschneiden bewirkenden nach unten angestellten Bereich und schließlich den vorstehenden das Abschneiden bewirkenden Teil aufweisen. Diese vergleichsweise komplizierte Abbildung und Abkröpfung der Messer in radialer Richtung wird sinnvoll so ausgebildet, dass der Schwerpunkt der abgekröpften Messer dennoch in der durch einen Messerträger, beispielsweise einen Teller oder einen Arm, aufgespannten Ebene liegt. Auf diese Art und Weise werden Biegekräfte von dem Messer ferngehalten. Der aufwärts gekröpfte innere Teil des Messers erfüllt dann zwar keine Schneidfunktion, sondern dient nur dem Massenausgleich. Es versteht sich, dass dieser Bereich des Messers die Anbringung einer Schneide nicht benötigt. Die Schneide kann sich so nur über die beiden weiteren Teile bzw. Bereiche erstrecken.

Die ortsfest angeordneten ersten und zweiten Leitelemente können auch in mehrere Abschnitte unterteilt sein, die in Relation zu der Bewegungsbahn der Messer angeordnet sind. Das erste Leitelement bzw. dessen einzelne Abschnitte sind senkrecht quer zur Arbeitsrichtung ausgerichtet angeordnet, um einerseits die nach vorn gerichtete Umbiegung des Schnittguts zu ermöglichen, jedoch eine seitliche Umbiegung und Ableitung des Schnittguts zu verhindern. Die Ausbildung und Anordnung des zweiten Leitelementes bzw. seiner Abschnitte sollte in Relation zu dem äußeren Umfang des Schnittkreises erfolgen, also in geometrischer Zuordnung zu der Wirkung der Messer. Damit ergibt sich bei Unterteilung des zweiten Leitelementes in mehrere Abschnitte eine zwar zur vertikalen Längsmittelebene symmetrische, jedoch abschnittsweise gestufte Ausbildung, die drei oder fünf Abschnitte umfassen kann.

Die Vorrichtung in ihrer einfachsten Ausführungsform weist einen einzigen armartigen Messerträger auf, der drehfest mit der Antriebswelle verbunden ist und an dessen beiden freien Enden je ein Messer angeordnet ist. Die gesamte Vorrichtung besitzt damit nur diese zwei Messer, ist äußerst einfach aufgebaut und erreicht trotzdem eine überraschend gute Häckselwirkung bei geringem Schnittkraftbedarf. Es versteht sich, dass die Arbeitsgeschwindigkeit bei dieser einfachsten Ausführungsform begrenzt ist. Die Anordnung der Messer erfolgt in der Regel paarweise, und zwar in Verwendung mit als arm- oder stangenförmig ausgebildeten Messerträgern. Scheibenförmige Messerträger sind nicht sinnvoll, weil durch einen solchen scheibenartigen Messerträger ein Teil des Durchtrittsraumes für das zerschnittene Schnittgut nach unten abgedeckt bzw. verschlossen wird. Es ist jedoch sinnvoll, wenn mehrere Paare von Messern vertikal beabstandet vorgesehen sind. Bei der Anordnung von zwei Paaren von Messern nehmen die Messer eine 90°-Anordnung zueinander ein. Bei drei Messerpaaren beträgt der Winkel von einem Messer zu dem nachfolgenden Messer 60° usw.. Es ist jedoch nicht sinnvoll, mehrere Paare von Messern in einer gemeinsamen Schnittebene umlaufend anzutreiben. Sinnvoll ist es, mit jedem Paar von Messern eine eigene Schnittebene zu bilden, wobei diese Schnittebenen vertikal übereinander und beabstandet zueinander vorgesehen sind. Der sinnvolle bzw. erforderliche Abstand der Paare von Messern in vertikaler Richtung ergibt sich aus den geometrischen Bedingungen der Elemente zueinander, insbesondere zwischen dem Neigungswinkel des zweiten Leitelementes und dem Anstell- bzw. Kröpfungswinkel der Bereiche des Messers, welches die Zerschnittwirkung erbringt. Der vertikale Abstand der Paare von Messern voneinander ist also auf den Neigungswinkel der geneigten Stellung des Schnittgutes und auf eine gleichmäßige Aufteilung des Zerschneidens auf die Paare von Messern abgestimmt. Damit wird jedes Messer unterschiedlicher Messerpaare gleichmäßig belastet und für eine Schnittarbeit herangezogen. Die betreffenden Teile der die Zerschneidwirkung erbringenden Messer sind an sich größer bzw. länger ausgebildet, als es der nach vorwärts in Arbeitsrichtung bestehenden Neigung des Leitelementes entspricht. Damit wird dem Umstand Rechnung getragen, dass eine abgeschnittene Halmwand des Schneidgutes immer die Tendenz hat, sich noch mehr umzulegen, so dass das Schnittgut in einem noch flacheren Winkel mit dem betreffenden Teil des Messers beim Zerschneiden in Kontakt kommt. Um auch hier eine saubere Zerschneidwirkung zu ermöglichen, sind die betreffenden Teile der Messer verlängert.

An sich sind die umlaufend angetriebenen Messer in einem haubenartigen Gehäuse angeordnet, dessen in Arbeitsrichtung vorderer Teil die Leitelemente aufweist und dessen entgegen der Arbeitsrichtung nach hinten abstehender Teil verjüngt ausgebildet sein kann. Diese besondere Ausbildung des Gehäuses erbringt also nicht nur die Gehäusefunktion, also die Abdeckung der umlaufenden Messer im Schnittkreis, sondern auch die Funktion des Leitbleches und die Funktion der Formung einer Schwadablage durch den sich in Arbeitsrichtung nach hinten erstreckenden verjüngten Teil. Die Verjüngung kann so ausgeführt sein, dass quer zur Arbeitsrichtung trapezförmige Querschnitte entstehen, durch die hinreichend Platz für die Anordnung weiterer Elemente der Vorrichtung, insbesondere der Räder, geschaffen wird. Der sich verjüngende Querschnitt hat schließlich noch Einfluss auf die restliche Schwadbildung des abgeschnittenen und gehäckselten Schnittgutes.

### KURZBESCHREIBUNG DER FIGUREN

Die Erfindung wird anhand bevorzugter Ausführungsbeispiele weiter erläutert und beschrieben. Es zeigen:
- **Fig. 1**: eine Draufsicht auf eine erste Ausführungsform der Vorrichtung,
- **Fig. 2**: einen Schnitt gemäß der Linie II-II in Fig. 1,
- **Fig. 3**: einen Schnitt gemäß der Linie III-III in Fig. 1,
- **Fig. 4**: eine Ansicht der Vorrichtung in Richtung IV in Fig. 1,
- **Fig. 5**: eine Draufsicht auf eine zweite Ausführungsform der Vorrichtung,
- **Fig. 6**: einen Schnitt gemäß der Linie VI-VI in Fig. 5,
- **Fig. 7**: einen Schnitt gemäß der Linie VII-VII in Fig. 5,
- **Fig. 8**: eine Draufsicht auf eine dritte Ausführungsform der Vorrichtung,
- **Fig. 9**: einen Schnitt gemäß der Linie IX-IX in Fig. 8,
- **Fig. 10**: einen Schnitt gemäß der Linie X-X in Fig. 8,
- **Fig. 11**: eine Detaildarstellung eines Messers,
- **Fig. 12**: einen Schnitt gemäß der Linie XII-XII in Fig. 11,
- **Fig. 13**: einen, Schnitt gemäß der Linie XIII-XIII in Fig. 11
- **Fig. 14**: eine Ansicht des Messers in Richtung XIV in Fig. 11, und
- **Fig. 15**: eine Draufsicht auf das Messer in Richtung XV in Fig. 11.

### FIGURENBESCHREIBUNG

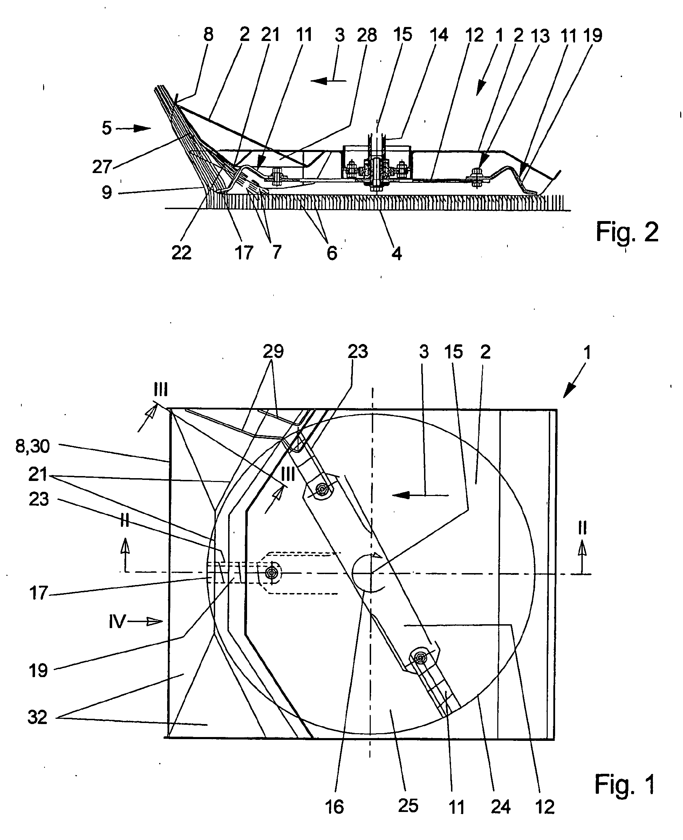

In den Fig. 1 ist die Vorrichtung 1 in einer ersten Ausführungsform gezeigt. Die Vorrichtung 1 kann als Rasenmäher mit nur einem Mähkreisel, aber auch als Mähgerät oder Mähbalken mit mehreren nebeneinander angeordneten Mähkreiseln angesehen werden. Die Vorrichtung 1 weist ein Gehäuse 2 auf, welches in Arbeitsrichtung 3 z. B. auf hier nicht dargestellten Rädern über den Boden 4 bewegt wird. Auf dem Boden 4 wächst Schnittgut 5, welches z. B. als halmartiges Gras ausgebildet ist, welches schematisierend dargestellt und verdeutlicht ist. Die Vorrichtung 1 ist für insbesondere hoch gewachsenes Schnittgut 5 besonders gut geeignet. Das Schnittgut 5 wird mit der Vorrichtung 1 vom Boden 4 abgeschnitten und dann weiterhin zerschnitten. Es werden die Begriffe Abschneiden und Zerschneiden unterschieden. Mit dem Begriff Abschneiden wird der erste bodennahe Schnitt verstanden, mit welchem der einzelne Halm in der Schnittebene im Bereich des Bodens 4 abgetrennt wird, so dass nur noch die Stoppeln 6 am Boden stehen bleiben. Mit dem Begriff Zerschneiden wird ein Häckselvorgang bezeichnet, mit dem das abgeschnittene Schnittgut in eine Mehrzahl Abschnitte unterteilt wird, die eine im Vergleich zum hoch wachsenden Schnittgut 5 relativ kleine Erstreckung in Längsrichtung aufweisen. Das Schnittgut 5 wird letztlich in die Stoppeln 6 und das zerschnittene Schnittgut 7 unterteilt. Das zerschnittene Schnittgut 7 wird in einem verdichteten bodennahen Schwad zwischen den Stoppeln 6 abgelegt, so dass es hier beschleunigt verrottet.

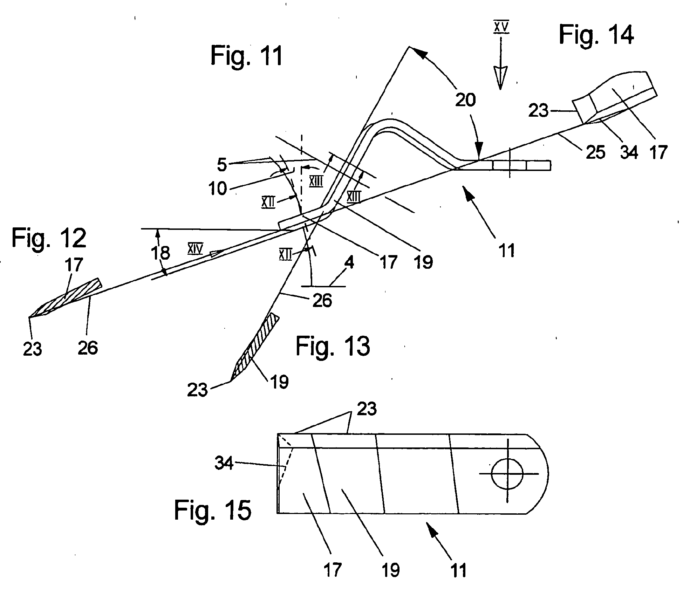

Das Gehäuse 2 der Vorrichtung 1 weist in seinem in Arbeitsrichtung 3 vorderen Bereich ein erstes Leitelement 8 auf, mit dem während der Vorwärtsbewegung der Vorrichtung 1 in Arbeitsrichtung 3 das mehr oder weniger aufrecht wachsende Schnittgut 5 in eine nach vorwärts geneigte Stellung in einer ersten Winkelposition 9 überführt wird. Die Halme des Schnittgutes 5 stützen sich dabei aneinander ab, wie es in Fig. 2 schematisiert angedeutet ist. Das Schnittgut 5 weist zur Vertikalen in der nach vorwärts geneigten Stellung der Winkelposition 9 einen Neigungswinkel 10 (Fig. 11) auf, der durch die entsprechende Ausbildung und Anordnung des Leitelementes 8 relativ zum Schneidkreis und den Messern vorgegeben bzw. beeinflusst wird.

Zum Abschneiden und Zerschneiden des Schnittgutes 5 besitzt die Vorrichtung Messer 11. Die in den Fig. 1 und 2 dargestellte Vorrichtung weist zwei Messer 11 auf, die auf einem armartigen Messerträger 12 jeweils endseitig gelagert sind. Die beiden Messer 11 sind in durchgezogener Darstellung in Fig. 1 verdeutlicht. Eine weitere Stellung ist gestrichelt verdeutlicht. Fig. 2 zeigt die beiden Messer 11 gemäß der gestrichelt dargestellten Stellung der Fig. 1. Die Messer 11 sind also in der Regel paarweise vorgesehen. An den freien Enden des Messerträgers 12 sind Aufhängungen 13 gebildet, an denen die Messer 11 pendelnd beweglich aufgehängt sind, so dass sie sich in die in Fig. 1 dargestellte Stellung unter Fliehkrafteinwirkung ausrichten und ihre Schneidearbeit erbringen. Zu diesem Zweck besitzt die Vorrichtung eine Welle 14 mit etwa oder exakt vertikal ausgerichteter Achse 15. Die Welle 14 wird durch einen hier nicht dargestellten Antrieb, beispielsweise einen Elektro- oder Verbrennungsmotor, angetrieben, und zwar in Drehrichtung 16 (Fig. 1). Die Anordnung, der Antrieb und die Lagerung der Welle 14 im Gehäuse 2 ist an sich aus der Bauart der Scheiben- oder Sichelmäher bekannt.

Jedes Messer 11 besitzt eine eigenwillige abgekröpfte Formgebung, wie es insbesondere anhand der Fig. 2 und 11 verdeutlicht ist. Radial von außen nach innen weist jedes Messer 11 zunächst einen nach unten abgekröpften ersten Messerbereich 17 auf. Dieser Messerbereich 17 ist in radialer Richtung nach unten abgekröpft, und zwar in einem Winkel 18 zur Horizontalebene aus einem Winkelbereich von etwa 10° bis 25°. Das Schnittgut 5 bildet während des Abschneidens mit dem Messerbereich 17 einen Winkel von etwa 90°, d.h. es wird rechtwinklig zu seiner Erstreckung bzw. Position und damit mit geringst möglicher Schnittkraft abgeschnitten. Der Messerbereich 17 kann in tangentialer Richtung so angestellt sein, dass seine vorauseilende Schneide tiefer angeordnet ist als sein nacheilender hinterer Rückenbereich. Der Messerbereich 17 erzeugt damit bei seiner Rotation eine aufwärts gerichtete Luftströmung, die an dem Halmgut zieht und dieses ausstrafft. Dies begünstigt das Abscheiden. An den ersten Messerbereich 17 schließt sich radial nach innen ein zweiter Messerbereich 19 an. Der Messerbereich 19 ist in radialer Richtung ebenfalls nach unten abgekröpft, und zwar in einem Winkel 20 zur Horizontalebene aus einem Winkelbereich von etwa 50° bis 75°. Der zweite Messerbereich 19 dient dem Zerschneiden des abgeschnittenen Schnittguts. Das Schnittgut 5 bildet während des Zerschneidens mit dem Messerbereich 19 einen Winkel von etwa 90°, d. h. es wird rechtwinklig zu seiner Erstreckung bzw. Position und damit mit geringst möglicher Schnittkraft zerschnitten. Der Messerbereich 19 ist in tangentialer Richtung so angestellt, dass seine vorauseilende Schneide höher angeordnet ist als sein nacheilender hinterer Rückenbereich. Der Messerbereich 19 erzeugt bei seiner Rotation eine abwärts gerichtete Luftströmung, die das abgeschnittene Schnittgut nach unten zieht und fördert. Dies begünstigt das Zerscheiden und verstopfungsfreie Fördern nach unten.

Am Gehäuse 2 ist ein zweites Leitelement 21 vorgesehen. Das zweite Leitelement 21 hat die Aufgabe, das abgeschnittene Schnittgut in eine zweite Winkelposition 22 zu bringen. Die zweite Winkelposition 22 unterscheidet sich von der ersten Winkelposition 9. Das Schnittgut 5 nimmt in der zweiten Winkelposition 22 einen Winkel zur Vertikalebene ein, die dem Winkel 20 der zweiten Messerbereiche 19 zur Horizontalebene entspricht. Damit ergibt sich der oben beschriebene senkrechte Zerschnitt des Schnittguts mit geringem Kraftbedarf und guter und gleichmäßiger Häckselwirkung.

An den zweiten Messerbereich 19 kann sich radial nach innen ein nach oben gekröpfter Teil anschließen, der jedoch keine Schneidarbeit erbringt. Er dient dem Massenausgleich der übrigen Bereiche der Messer 11. An diesen nach oben gekröpften Teil schließt sich also in radialer Richtung nach außen der Messerbereich 19 an, der nach unten gekröpft ist. Das Messer 11 endet radial frei nach außen in dem ersten Messerbereich 17. Der Messerbereich 17 erfüllt die Abschneidfunktion für das Schnittgut 5 und erbringt den bodennahen Schnitt unter Abtrennung der Stoppeln 6. Jedes Messer 11 besitzt eine Schneide 23, die sich zumindest über die Messerbereiche 17 und 19 erstreckt. Die frei endenden Messerbereiche 17 der beiden Messer 11 beschreiben bei ihrem Antrieb in Drehrichtung 16 einen Schneidkreis 24, der in Fig. 1 angedeutet ist. Dieser Schneidkreis 24 schließt eine Schnittebene 25 ein, die durch den Umlauf der vorstehenden Messerbereiche 17 der Messer 11 festgelegt wird. Die Schnittebene 25 ist in der Regel horizontal ausgerichtet angeordnet. Es kann aber auch eine geringfügige Anstellung in Arbeitsrichtung 3 nach vorn geneigt vorgesehen sein, wie dies zur Erreichung eines Freischnittes der Stoppeln 6 bekannt ist.

Die Bereiche oder Teile 17, 19 der Messer 11 sind in Umfangsrichtung, also entsprechend der Drehrichtung 16, unterschiedlich angestellt, wie dies aus den Fig. 11 bis 14 entnehmbar ist. Durch diese tragflügel- oder schaufelartige unterschiedliche Anstellung werden Luftströmungen erzielt, um auf das Schnittgut 5 eine Ausricht- und Förderwirkung auszuüben. Der Bereich oder vorstehende Teil 17 der Messer 11 ist in der aus den Fig. 12 und 14 erkennbaren Weise angestellt, wobei die Relativlage zu einer Drehebene 26 erkennbar ist. Die in Drehrichtung 16 nach vom weisende Schneide 23 ist tiefer positioniert als das hintere Ende jedes Messers 11 in diesem Bereich bzw. Teil 17. Damit wird beim umlaufenden Antrieb dieses Teils 17 eine vom Boden 4 weg nach oben gerichtete Luftströmung auf die Halme des Schnittgutes 5 ausgeübt. Es wird also gleichsam während des Abschneidens an den Halmen des Schnittgutes 5 nach oben gezogen und auf die Halme des Schnittgutes 5 eine ausstraffende Wirkung erzeugt. Der Teil 17 jedes Messers erbringt nur diese Ausstraff- und Abschneidwirkung für das Schnittgut 5, also das Abschneiden von den auf dem Boden 4 stehen bleibenden Stoppeln 6.

Der Bereich oder Teil 19 der Messer 11 ist in Umfangsrichtung genau gegensätzlich angestellt bzw. abgewinkelt. Dies geht aus den Schnittdarstellungen der Fig. 12 und 13 hervor, die wiederum die Relativlage des Querschnittes des Messers 11 in diesem Bereich relativ zur Drehebene 26 und zur Drehrichtung 16 verdeutlicht. Auch hier läuft die Schneide 23 in Drehrichtung 16 voraus. Die Schneide 23 ist hier höher über der Drehebene 26 angeordnet als das hintere Ende jedes Messers 11 im Bereich bzw. Teil 19. Der Teil 19 der Messer 11 ist in einem Anstellwinkel angeordnet, der eine Luftströmung nach unten in Richtung auf den Boden 4 bewirkt, wodurch eine Förderwirkung auf die abgeschnittenen Halme des Schnittgutes 5 in einer auf den Boden 4 gerichteten Förderrichtung 27 ausgeübt wird. In dieser Förderrichtung 27 werden also die Halme des abgeschnittenen Schnittgutes 5, geleitet durch das zweite Leitelement 21, dem Teil 19 der Messer 11 zugeführt und durch die Schneide 23 im Bereich des Teiles 19 in die kurzen Abschnitte des zerschnittenen Schnittgutes 7 überführt. Die Luftströmung in Förderrichtung 27, die auf den Boden 4 hin gerichtet ist, bewirkt jedoch nicht nur das Nachziehen der abgeschnittenen Halme des Schnittgutes 5 und den Eintritt der erwünschten Häckselwirkung, sondem erbringt noch die erwünschte verdichtete Schwadablage des zerschnittenen Schnittgutes 7 zwischen den Stoppeln 6. Besonderes vorteilhaft ist dabei, dass die Luftströmung nicht wie im Stand der Technik nach oben auf einen Zwischenraum 28 zwischen dem Messerträger 12 bzw. oberhalb der Schnittebene 25 im Gehäuse 2 gerichtet ist. Die Luftströmung führt vielmehr das zerschnittene Schnittgut 7 mit seinen Abschnitten im vorderen Bereich der Schnittebene 25 direkt nach unten in Richtung auf den Boden 4, so dass der Zwischenraum 28 in der Regel völlig frei von zerschnittenem Schnittgut 7 bleibt und eine Verstopfung an dieser Stelle nicht eintreten kann.

Der Anstellwinkel der Teile 19 der Messer 11 kann in einem Bereich zwischen 5° bis 10° liegen. Auch die vorstehenden Teile 17 der Messer 11 können, wenngleich in umgekehrter Richtung, in einem entsprechenden Anstellwinkel vorgesehen sein. Auch dieser Anstellwinkel kann etwa zwischen 5° und 10° betragen.

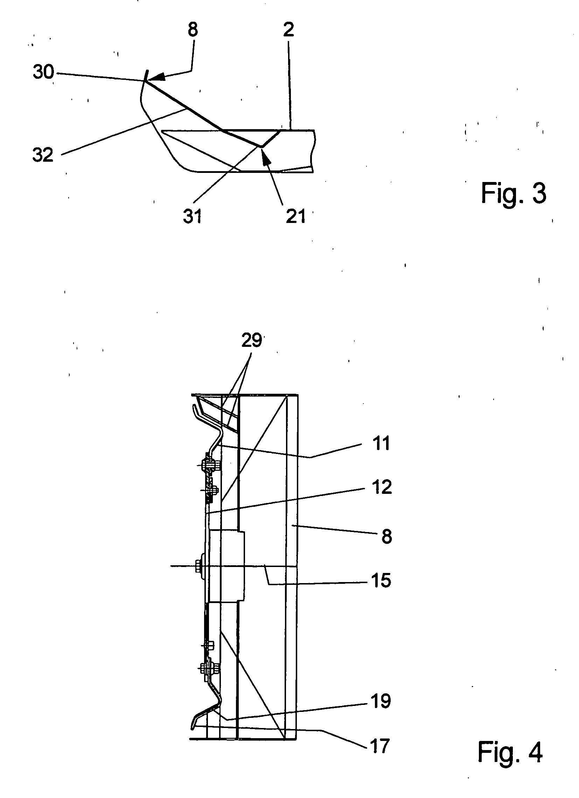

Das Ausführungsbeispiel der Fig. 1 bis 4 lässt anhand der Fig. 1 und 4 erkennen, dass auf der in Arbeitsrichtung 3 liegenden rechten Seite das Gehäuse 2 mit einem Sperrelement 29 versehen ist. Das Sperrelement 29 ist ortsfest angeordnet und mit dem Gehäuse 2 verbunden. Es handelt sich um einen Einbau bzw. einen Formkörper, der den freien Querschnitt zwischen den umlaufenden Messern 11 und dem darüber befindlichen Teil des Gehäuses 2 versperrt, so dass das abgeschnittene Schnittgut 5 gehindert ist, an dieser Stelle entgegen der Arbeitsrichtung 3 nach hinten durchzutreten. Diese rechte Seite der Vorrichtung 1 bildet relativ zur Drehrichtung 16 einen Raum oder Zwickel, in welchem eine Anhäufung von abgeschnittenem Schnittgut 5 stattfindet. Ohne ein Sperrelement 29 neigt daher diese Stelle zu Verstopfungen. Das Sperrelement 29 bewirkt, dass sich das auf dieser Seite verdichtet anfallende Schnittgut 5 nicht ungeschnitten nach hinten bewegen kann, sondern gezwungen wird, den Zerschneidvorgang zu durchlaufen. Trotz der unvermeidlichen Verdichtung an dieser Stelle wird das Schnittgut durch die Messerbereiche 19 zerschnitten bzw. gehäckselt.

Insbesondere die Fig. 1 und 3 lassen erkennen, dass die Leitelemente 8 und 21 des Gehäuses 2 auf unterschiedlicher Höhe und in unterschiedlicher Relativlage zueinander bezüglich der Arbeitsrichtung 3 angeordnet sein können, um unterschiedliche Winkelpositionen vorzubilden. Das Leitelement 8 weist als wesentliches Element eine Leitkante 30 auf. Ebenso besitzt das Leitelement 21 eine Leitkante 31. Beide Leitelemente 8 und 21 sind durch einen satteldachförmigen Bereich 32 miteinander verbunden, um die zwei unterschiedlichen Winkelpositionen des Schnittguts 5 zu ermöglichen. Über die Arbeitsbreite gesehen kann der dachförmige Bereich 32 aus mehreren Elementen oder Abschnitten zusammengesetzt sein, wie dies Fig. 1 erkennen lässt. Aus Fig. 1 ist auch erkennbar, dass sich das erste Leitelement 8 mit seiner Leitkante 30 quer zur Arbeitsrichtung 3 gerade erstreckt, während das zweite Leitelement 21 polygonartig ausgebildet und relativ zu dem Umfang des Schneidkreises 24 angeordnet ist.

Fig. 4 zeigt die Ansicht der Vorrichtung in Richtung IV in Fig. 1 Der Messerträger 12 mit den Messern 11 ist gegenüber Fig. 2 um 90° gedreht dargestellt. Es ist weiter erkennbar, dass das Sperrelement 29 den Durchgang zwischen den Messern 11 und dem Gehäuse nach hinten versperrt.

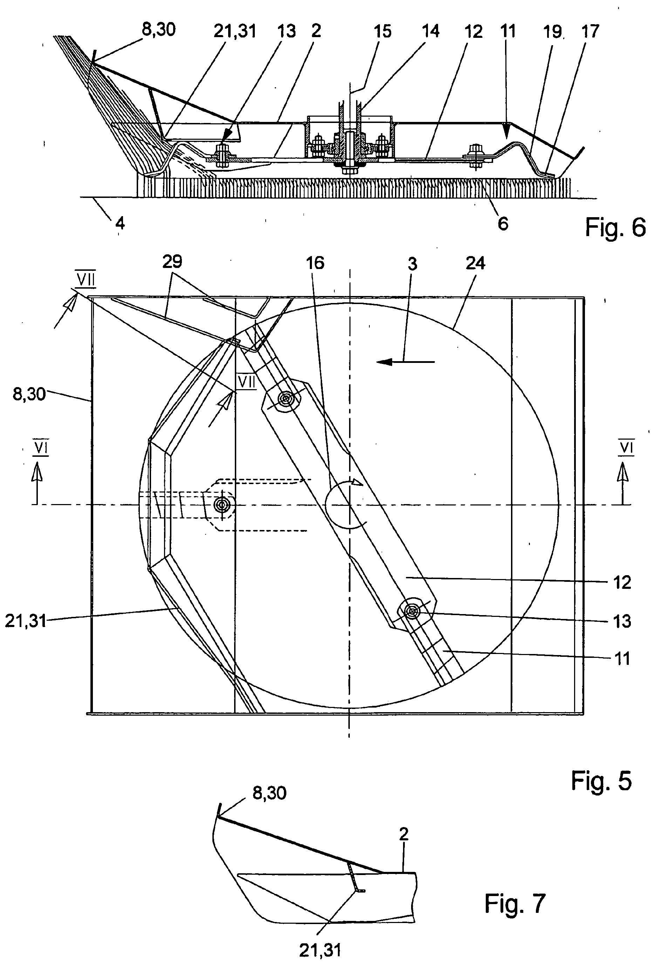

Bei der Ausführungsform der Vorrichtung gemäß den Fig. 5 bis 7 fehlt ein vorspringender dachförmiger Bereich 32 zwischen den Leitelementen 8 und 21. Die Gestaltung ist gerade umgekehrt wie in Fig. 2. Die Leitelemente 8 und 21 sind hier in Fig. 6 im Wesentlichen in Form von Leitkanten 30 und 31 vorgesehen. Auch hier befindet sich das Leitelement 21 bzw. die Leitkante 31 unterhalb der Ebene, die das den Schneidkreis 24 abdeckende Gehäuse 2 einnimmt. Dies zielt darauf ab, das zweite Leitelement 21 möglichst nahe an dem Messer 11 anzuordnen und im Übrigen, wie Fig. 5 zu erkennen gibt, den Verlauf des zweiten Leitelements 21 polygonartig zu gestalten, damit relativ zum Schneidkreis 24 über die Arbeitsbreite im Wesentlichen ähnliche Zerschneidbedingungen entstehen.

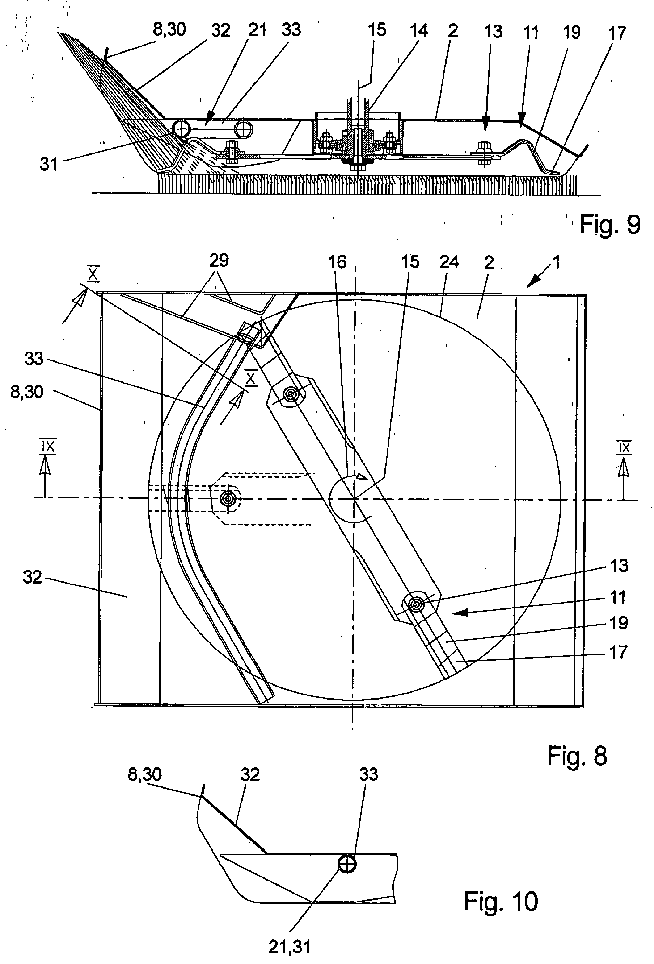

Das Ausführungsbeispiel der Fig. 8 bis 10 ist in weiten Bereichen ähnlich wie die vorangehend beschriebenen Ausführungsformen ausgebildet. Das zweite Leitelement 21 ist hier in Form eines gebogenen Rohrabschnitts 33 vorgesehen, der unter dem Gehäuse 2 befestigt ist. Die Biegung des Rohrabschnitts 33 ist dem Umfang des Schneidkreises 24 angepasst, um auch hier über die Arbeitsbreite etwa konstante Zerschneidbedingungen zu erhalten. Von dem Rohrabschnitt 33 wird in seinem unteren Bereich die Leitkante 31 gebildet, die verantwortlich dafür ist, dass das Schnittgut 5 nach dem Abschneiden durch das Leitelement 21 seine zweite Winkelposition 22 einnimmt.

Fig. 11 zeigt in vergrößerter Darstellung das in Fig. 2 links erkennbare Messer 11 mit seinen Messerbereichen 17 und 19 in den entsprechenden Winkeln. Der erste Messerbereich 17 ist in einem Winkel 18 zur Horizontalebene angeordnet, und zwar in radialer Richtung. Der Winkel 18 liegt in einem Winkelbereich von etwa 10° bis 25°. Es ist hier ein einzelner Halm des Schnittgutes 5 in seiner geneigten Stellung am Boden 4 verdeutlicht, woraus erkennbar wird, dass der Abschneidevorgang senkrecht zum Halm erfolgt.

Der zweite Messerbereich 19 ist in einem Winkel 20 zur Horizontalebene geneigt angeordnet, und zwar radial nach außen. Der Winkel 20 ist ein Winkel aus einem Winkelbereich von etwa 50° bis 75°.

Die Fig. 12 bis 14 zeigen Schnitte bzw. eine Ansicht gemäß den Schnitt- und Ansichtsangaben, jeweils um unterschiedliche Drehebenen 26 gedreht. Fig. 14 lässt erkennen, dass am tiefsten Punkt der Schneide 23 eine Abflachung 34 beginnt, deren Kontur auch in Fig. 15 erkennbar ist. Die Anordnung dieser Abflachung 34 zielt darauf ab, außen am Messer 11 einen Punkt zu vermeiden, der eine tiefere Stellung als das freie Ende der Schneide 23 einnimmt. Auf diese Weise wird verhindert, dass der Schneide 23 nachfolgende Bereiche des Messers 11 das Schnittgut 5 entsprechend der Drehrichtung 16 eindrücken bzw. umdrücken können. Dies begünstigt einen sauberen Abschneidvorgang.

### BEZUGSZEICHENLISTE

- 1: Vorrichtung
- 2: Gehäuse
- 3: Arbeitsrichtung
- 4: Boden
- 5: Schnittgut
- 6: Stoppel
- 7: zerschnittenes Schnittgut
- 8: erstes Leitelement
- 9: erste Winkelposition
- 10: Neigungswinkel
- 11: Messer
- 12: Messerträger
- 13: Aufhängung
- 14: Welle
- 15: Achse
- 16: Drehrichtung
- 17: erster Messerbereich
- 18: Winkel
- 19: zweiter Messerbereich
- 20: Winkel
- 21: zweites Leitelement
- 22: zweite Winkelposition
- 23: Schneide
- 24: Schneidkreis
- 25: Schnittebene
- 26: Drehebene
- 27: Förderrichtung
- 28: Zwischenraum
- 29: Sperrelement
- 30: Leitkante
- 31: Leitkante
- 32: flächiger Bereich
- 33: Rohrabschnitt
- 34: Abflachung

## Patentansprüche

1. Verfahren zum Abschneiden und Zerschneiden von insbesondere hoch wachsendem Schnittgut (5), wobei mindestens zwei, in Arbeitsrichtung parallel zum Boden (4) bewegte Messer (11) in einer etwa horizontal zum Boden ausgerichteten Schnittebene (25) um eine etwa vertikal ausgerichtete Welle (14) in Drehrichtung (16) umlaufend angetrieben werden, wobei das Schnittgut (5) mit einem ersten Leitelement (8) in eine in Arbeitsrichtung vorwärts geneigte Stellung in eine erste Winkelposition (9) überführt und am Boden (4) mit ersten Messerbereichen (17) in dieser ersten Winkelposition (9) abgeschnitten wird, und wobei durch eine Anstellung zumindest eines Teils der Messer (11) zur Schnittebene (25) auf das Schnittgut eine Förderwirkung in einer auf den Boden gerichteten Förderrichtung (27) ausgeübt wird, **dadurch gekennzeichnet, dass** das abgeschnittene Schnittgut dann mit einem zweiten Leitelement (21) in eine zweite Winkelposition (22) überführt und mit anderen Messerbereichen (19) in dieser zweiten Winkelposition (22) zerschnitten wird.

2. Verfahren nach Anspruch 1, **dadurch gekennzeichnet, dass** das Schnittgut (5) während der Überführung in die in Arbeitsrichtung (3) vorwärts geneigte Stellung der ersten Winkelposition (9) an einem seitlichen Umbiegen quer zur Arbeitsrichtung (3) gehindert und dabei abgeschnitten und dann das abgeschnittene Schnittgut in der zweiten Winkelposition (22) unter im Wesentlichen gleichen Verhältnissen über die Arbeitsbreite entsprechend dem Schneidkreis (24) während der Förderung in der auf den Boden gerichteten Förderrichtung mehrfach zerschnitten wird.

3. Verfahren nach Anspruch 1 oder 2, **dadurch gekennzeichnet, dass** das Schnittgut (5) mit einem radial vorstehenden Bereich (17) der Messer (11) abgeschnitten wird, wobei diese Messerbereiche (17) in einem Winkel (18) aus einem Winkelbereich zwischen 10° bis 25° gegenüber der Horizontalebene nach unten geneigt angeordnet sind.

4. Verfahren nach Anspruch 1 oder 2, **dadurch gekennzeichnet, dass** das Schnittgut (5) mit einem radial zurückliegenden Bereich (19) der Messer (11) zerschnitten wird, wobei diese Messerbereiche (19) in einem Winkel (20) aus einem Winkelbereich zwischen 50° bis 75° gegenüber der Horizontalebene nach unten geneigt angeordnet sind.

5. Vorrichtung zum Abschneiden und Zerschneiden von insbesondere hoch wachsendem Schnittgut (5), mit mindestens zwei in Arbeitsrichtung (3) parallel zum Boden (4) bewegten Messern (11), die in einer etwa horizontal zum Boden (4) ausgerichteten Schnittebene (25) um eine etwa vertikal ausgerichtete Welle (14) umlaufend angetrieben sind und die einen ersten Messerbereich (17) und einen zweiten Messerbereich (19), aufweisen, wobei der erste Messerbereich (17) zum Abschneiden des Schnittguts (5) dient und der zweite Messerbereich (19) zum Zerschneiden des abgeschnittenen Schnittguts mit radial abwärts und tangential aufwärts geneigten Anstellwinkeln schräg zur Schnittebene (25) angeordnet ist, so dass damit auf das Schnittgut (5) eine Förderwirkung in einer auf den Boden (4) gerichteten, durch den tangentialen Anstellwinkel festgelegten Förderrichtung (27) ausgeübt wird, und mit einem ersten ortsfest angeordneten Leitelement (8) für die Überführung des Schnittguts (5) in eine in Arbeitsrichtung vorwärts geneigte Stellung (9), **dadurch gekennzeichnet, dass** die Vorrichtung (1) mindestens ein zweites ortsfest angeordnetes Leitelement (21) für die Überführung des abgeschnittenen Schnittguts in eine zweite Winkelposition (22) und zum Zerschneiden mit den zweiten Messerbereichen (19) in dieser zweiten Winkelposition (22) aufweist, wobei das zweite Leitelement (21) zwecks Schaffung im Wesentlichen gleicher Verhältnisse über die Arbeitsbreite entsprechend dem Schneidkreis (24) ausgebildet und angeordnet ist.

6. Vorrichtung nach Anspruch 5, **dadurch gekennzeichnet, dass** der erste Messerbereich (17) radial abwärts geneigt in einem Winkel (18) aus einem Winkelbereich zwischen 10° und 25° angeordnet ist und/oder der zweite Messerbereich (19) radial abwärts geneigt in einem Winkel (20) aus einem Winkelbereich zwischen 50° und 75° angeordnet ist.

7. Vorrichtung nach Anspruch 5 oder 6, **dadurch gekennzeichnet, dass** das erste ortsfest angeordnete Leitelement (8) eine sich senkrecht zur Arbeitsrichtung (3) erstreckende Leitkante (30) aufweist, die das Schnittgut (5) an einem seitlichen Umbiegen quer zur Arbeitsrichtung (3) hindert, und/oder dass das zweite ortsfest angeordnete Leitelement (21) eine sich entsprechend dem Schneidkreis (24) etwa bogenförmig oder polygonal erstreckende Leitkante (31) aufweist, die das abgeschnittene Schnittgut (5) unter im Wesentlichen gleichen Verhältnissen über die Arbeitsbreite in die zweite Winkelposition (22) bringt.

8. Vorrichtung nach Anspruch 7, **dadurch gekennzeichnet, dass** die sich etwa bogenförmig oder polygonal erstreckende Leitkante (31) des zweiten ortsfest angeordneten Leitelements (21) nur geringfügig höher als die höchste Stelle der umlaufend angetriebenen Messer (11) angeordnet ist.

9. Vorrichtung nach einem der Ansprüche 5 bis 8, **dadurch gekennzeichnet, dass** die Vorrichtung (1) auf der durch die Drehrichtung (16) der Messer (11) bestimmten Seite ein ortsfest angeordnetes Sperrelement (29) zum Verhindern des Durchtritts von Schnittgut (5) nach hinten aufweist.

10. Vorrichtung nach einem der Ansprüche 5 bis 9, **dadurch gekennzeichnet, dass** der erste radial außen endende Messerbereich (17) eine Schneide (23) aufweist, die radial außen als tiefster Punkt der Messer (11) endet

## Claims

1. A method for cutting and slicing especially high growing vegetation (5), comprising at least two knifes (11), the two knifes being operatively connected to a shaft (14) to be rotated therewith in a sense of rotation (16) within a cutting plane (25) approximately parallel to the soil (4), the shaft (14) being arranged to be approximately vertical, the vegetation (5) being bend down by a first guiding element (8) into a first in working direction forwardly inclined angle position (9) and being cut near the soil (4) in this first position (9) by a first knife portion (17), at least a part of the knifes (11) being positioned with respect to the cutting plane (25) in a manner to transfer a conveying effect to the vegetation according a conveying direction (27) directed to the soil, **characterized in that** the vegetation after being cut is transferred by a second guiding element (21) into a second angle position (22) and is sliced in this second angle position (22) by other knife portions (19).

2. The method of claim 1, **characterized in that** the vegetation (5) during the transfer into the first angle position (9), the first angle position (9) being forwardly inclined in working direction, is hindered to bend down laterally with respect to the working direction (3) and is cut in this position, and **in that** the vegetation after being cut is sliced several times in the second angle position (22) with the supply of substantially constant slicing conditions over the working width in accordance with the cutting circuit (24) during its conveying in the conveying direction directed to the soil.

3. The method of claims 1 or 2, **characterized in that** the vegetation (5) is cut by a radial protruding portion (17) of the knives (11), the portions (17) being arranged to be declined in a radial outward direction with respect to the horizontal plane at an angle (18) of between approximately 10° and 25°.

4. The method of claims 1 or 2, **characterized in that** the vegetation (5) is sliced by a radial downstream portion (19) of the knives (11), the portions (19) being arranged at an angle (20) of between approximately 50° and 25° to be declined in an downward direction with respect to the horizontal plane.

5. An apparatus for cutting and slicing especially high growing vegetation (5), comprising at least two knifes (11), the two knifes being operatively connected to an approximately vertically arranged shaft (14) to be rotated therewith in a sense of rotation (16) within a cutting plane (25) approximately parallel to the soil (4) and including a first knife portion (17) and a second knife portion (19), the first knife portion (17) being designed and arranged to cut the vegetation (5), the second knife portion (19) being designed and arranged to slice the already cut vegetation with radial downwardly and tangential upwardly angled parts being inclined positioned with respect to the cutting plane (25), so that a conveying effect is transferred to the vegetation (5) by the tangential angled part according a conveying direction (27) directed to the soil, the apparatus comprising a first fix arranged guiding element (8) to transfer the vegetation (5) into an in working direction forwardly inclined angle position (9), **characterized in that** the apparatus (1) includes at least one fix arranged second guiding element (21) to transfer the vegetation after being cut into a second angle position (22) and to slice the vegetation in this second angle position (22) by the second knife portions (19), the second knife portion (21) being designed and arranged to supply substantially constant slicing conditions over the working width in accordance with the cutting circuit (24).

6. The apparatus of claim 5, **characterized in that** the first portion (17) is arranged to be declined in a radial outward direction with respect to the horizontal plane at an angle (18) of between approximately 10° and 25° and/or the second knife portion (19) is arranged to be declined in a radial outward direction at an angle (20) of between approximately 50° and 75°.

7. The apparatus of claim 5 or 6, **characterized in that** the first fix arranged guiding element (8) includes a guiding edge (30), the guiding edge (30) being designed and arranged to extend approximately perpendicular to the working direction (3), the guiding edge (30) being designed and arranged to prevent the vegetation from bending in a lateral direction transverse to the working direction (3), and/or the second fix arranged guiding element (21) includes a guiding edge (31), the guiding edge (31) being designed and arranged to extend approximately arc-like or polygonal corresponding to the cutting circuit (24), the guiding edge (31) being designed and arranged to move the vegetation (5) into the second angle position (22) to realize substantially constant conditions over the working width.

8. The apparatus of claim 7, **characterized in that** the approximately arc-like or polygonal designed guiding edge (31) of the second fix arranged guiding element (21) is designed and arranged to be located only slightly higher than a highest place of the knifes being rotationally driven.

9. The apparatus of one of the claims 5 to 8, **characterized in that** the apparatus (1) comprises a stationary locking element (29), the locking element (29) being arranged at a side of the apparatus being determined by the sense or rotation (16) of the knives (11), the locking element (29) being designed and arranged to prevent passage of the vegetation (5) in a rear direction.

10. The apparatus of one of the claims 5 to 9, **characterized in that** the first radial extending knife portion (17) includes a cutting edge (23), the cutting edge (23) being designed and arranged to end in a radial outward direction as the lowest point of the knifes (11).

## Revendications

1. Procédé pour couper et découper en morceaux des végétaux (5), en particulier à tige haute, dans lequel au moins deux lames (11), déplacées dans la direction de travail parallèlement au sol (4), sont entraînées en rotation dans la direction de rotation (16) dans un plan de coupe (25) orienté sensiblement horizontalement au sol, autour d'un arbre (14) orienté sensiblement verticalement, les végétaux à couper (5) étant amenés par un premier élément déflecteur (8) dans une position inclinée vers l'avant, dans la direction de travail, d'une première position angulaire (9) et étant coupés au sol (4) dans cette première position angulaire (9) avec des premières zones de lame (17), et une action de transport étant exercée dans une direction de transport (27) dirigée vers le sol, sous l'effet de l'application sur les végétaux à couper d'au moins une partie des lames (11) par rapport au plan de coupe, **caractérisé en ce que** les végétaux coupés sont alors amenés au moyen d'un deuxième élément déflecteur (21) dans une deuxième position angulaire (22) et avec les autres zones de lame (19) sont découpés en morceaux dans cette deuxième position angulaire (22).

2. Procédé selon la revendication 1, **caractérisé en ce que** les végétaux à couper (5), lorsqu'ils sont amenés dans la position inclinée vers l'avant, dans la direction de travail (3), de la première position angulaire (9), sont empêchés de se plier vers les côtés transversalement à la direction de travail (3) et sont coupés dans cette situation, et ensuite les végétaux coupés sont découpés en morceaux à plusieurs reprises dans la deuxième position angulaire (22) dans des conditions sensiblement identiques sur la largeur de travail conformément au cercle de coupe (24) pendant le transport dans la direction de transport orientée vers le sol.

3. Procédé selon la revendication 1 ou 2, **caractérisé en ce que** les végétaux à couper (5) sont coupés avec une zone de lame (17) en saillie radiale sur les lames (11), ces zones de lame (17) étant inclinées vers le bas selon un angle (18) dans une plage angulaire entre 10° à 25° par rapport au plan horizontal.

4. Procédé selon la revendication 1 ou 2, **caractérisé en ce que** les végétaux à couper (5) sont découpés en morceaux avec une zone de lame (19) radialement en retrait sur les lames (11), ces zones de lame (19) étant inclinées vers le bas selon un angle (20) dans une plage angulaire entre 50° à 75° par rapport au plan horizontal.

5. Dispositif pour couper et découper en morceaux des végétaux (5), en particulier à tige haute, comportant au moins deux lames (11), déplacées dans la direction de travail (3) parallèlement au sol (4), qui sont entraînées en rotation dans un plan de coupe (25) orienté sensiblement horizontalement au sol (4), autour d'un arbre (14) orienté sensiblement verticalement, et qui comportent une première zone de lame (17) et une deuxième zone de lame (19), la première zone de lame (17) étant destinée à couper les végétaux (5) et la deuxième zone de lame (19), destinée à découper en morceaux les végétaux, étant disposée en oblique par rapport au plan de coupe (25) avec des angles d'approche inclinés radialement vers le bas et tangentiellement vers le haut, de manière à exercer ainsi sur les végétaux (5) une action de transport dans une direction de transport (27) orientée vers le sol (4), définie par l'angle d'approche tangentiel, et comportant un élément déflecteur (8) monté fixe (5) dans une position (9) inclinée vers l'avant dans la direction de travail, **caractérisé en ce que** le dispositif (1) comporte au moins un deuxième élément déflecteur (21) monté fixe pour amener les végétaux coupés dans une deuxième position angulaire (22) et pour les découper en morceaux dans cette deuxième position angulaire (22) avec les deuxièmes zones de lame (19), le deuxième élément déflecteur (21) étant réalisé et agencé conformément au cercle de coupe (24) en vue de créer des conditions sensiblement identiques sur la largeur de travail.

6. Dispositif selon la revendication 5, **caractérisé en ce que** la première zone de lame (17) est disposée en étant inclinée radialement vers le bas selon un angle (18) dans une plage angulaire entre 10° et 25° et/ou la deuxième zone de lame (19) est disposée en étant inclinée radialement vers le bas selon un angle (20) dans une plage angulaire entre 50° et 75°.

7. Dispositif selon la revendication 5 ou 6, **caractérisé en ce que** le premier élément déflecteur (8) comporte un bord de guidage (30) perpendiculaire à la direction de travail (3), qui empêche les végétaux (5) de se plier vers les côtés transversalement à la direction de travail (3), et/ou **en ce que** le deuxième élément déflecteur fixe (21) comporte un bord de guidage (31), orienté selon une forme sensiblement courbe ou polygonale correspondant au cercle de coupe (24), lequel amène les végétaux coupés (5) dans la deuxième position angulaire (22) dans des conditions sensiblement identiques sur la largeur de travail.

8. Dispositif selon la revendication 7, **caractérisé en ce que** le bord de guidage (31), orienté selon une forme sensiblement courbe ou polygonale, du deuxième élément déflecteur (21) est disposé seulement légèrement plus haut que l'emplacement le plus élevé des lames (11) entraînées en rotation.

9. Dispositif selon l'une quelconque des revendications 5 à 8, **caractérisé en ce que** le dispositif (1), sur le côté déterminé par la direction de rotation (16) des lames (11), comporte un élément d'arrêt (29) monté fixe et destiné à empêcher le passage des végétaux (5) vers l'arrière.

10. Dispositif selon l'une quelconque des revendications 5 à 9, **caractérisé en ce que** la première zone de lame (17), se terminant radialement à l'extérieur, comporte un tranchant (23), qui se termine radialement à l'extérieur en formant le point le plus bas des lames (11).
